# EUROPEAN PATENT APPLICATION

(11) **EP 3 614 412 A1**
(43) Date of publication of application: **26.02.2020**
(21) Application number: 18189777.8
(22) Date of filing: 20.08.2018
(51) Int. Cl.: H01H 85/00, B60R 16/023, H01H 85/20

(54) **CONNECTING ELEMENT**

(71) Applicant: Aptiv Technologies Limited, St. Michael (BB)
(72) Inventor: PILCZUK, Piotr, 30-838 Krakow (PL); KOT, Pawel, 32353 Trzyciaz (PL); HEBDA, Dariusz, 32-020 Wieliczka (PL); BEBENEK, Dawid, 32-050 Skawina (PL); STEFANSKI, Konrad, 31-851 Krakow (PL)
(74) Representative: Manitz Finsterwald Patent- und Rechtsanwaltspartnerschaft mbB

(57) **Abstract**

A connecting element defining an axial direction, comprising a first portion with a first contact surface for mechanically and electrically connecting the connecting element to a connecting portion of a fuse, an axially spaced second portion with a second contact surface for mechanically and electrically connecting the connecting element to a terminal or a bus bar, and a connecting portion mechanically and electrically connecting the first portion and the second portion. The connecting portion comprises at least one elongated part that is elastically bendable to allow relative lateral movement of the first and second portions when a first force acting in a lateral direction is applied to the first portion and a second force acting in an opposite lateral direction is applied to the second portion.

## Description

The present invention relates to a connecting element for electrically and mechanically connecting a fuse to a straight bus bar or a terminal.

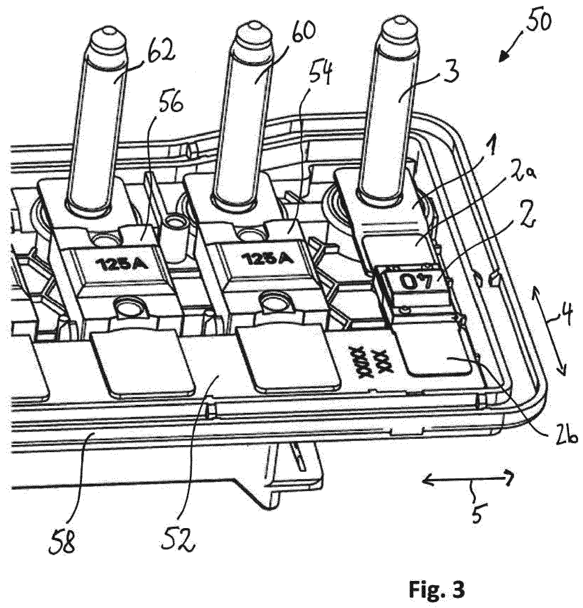

A straight bus bar can be used in a vehicle's electrical system to electrically connect multiple midi fuses to it. In a previous design, the bus bar is made of rigid conductive metal and is mechanically and electrically connected to one end of a fuse and the other end of the fuse is mechanically connected to one end of a rigid connecting element. The other end of the rigid connecting element is connected to a terminal. The main direction, i.e. the axial direction, of the fuse and the connecting element is arranged perpendicular to the main direction, i.e. the axial direction, of the bus bar (Fig. 3). When the vehicle is exposed to hot or cold climate conditions, the bus bar and a housing will thermally expand or contract due to a change of temperature. A problem occurs due to the fact that the bus bar which is made of metal and the housing which is made of plastic have different thermal expansion coefficients. When the bus bar and the housing heat up, the bus bar will expand less in its axial direction due to a lower thermal expansion coefficient than the housing will expand in the same direction. As a result, the fuse between the bus bar and the housing will experience a shear force. Since the fuse is mechanically weak, it can break in high or low temperature regions such as >130°C or <-40°C. This causes discomfort for the owner of the vehicle because functionality of the vehicle is lost.

Accordingly, it is an object of the invention to provide an improved connecting element that assures that an attached fuse does not break when a lateral force is exerted on the fuse.

The object is satisfied by a connecting element in accordance with claim 1. The connecting element of the invention defines an axial direction and comprises a first portion with a first contact surface for mechanically and electrically connecting the connecting element to a connecting portion of a fuse, an axially spaced second portion with a second contact surface for mechanically and electrically connecting the connecting element to a terminal or a bus bar, and a connecting portion mechanically and electrically connecting the first portion and the second portion. The connecting portion comprises at least one elongated part that is elastically bendable to allow relative lateral movement of the first and second portions when a first force acting in a lateral direction is applied to the first portion and a second force acting in an opposite lateral direction is applied to the second portion.

A general idea of the invention is to use a connecting element connected to a fuse to protect the fuse from shear force applied to the fuse, e.g. due to a difference in thermal expansion between a housing and a bus bar that are both directly or indirectly connected to the fuse. In order to protect the fuse, the shear force that would usually be applied to the fuse is reduced by elastic deformation of the connecting element. The connecting portion of the connecting element therefore functions as a resilient compensation portion.

Advantageous aspects of the connecting element and an electrical assembly in which the connecting element may be used can be taken from the following description, the dependent claims and the drawings.

According to a first aspect, the at least one elongated part is formed from sheet metal. This simplifies manufacturing of the elongated part and at the same time ensures that the elongated part is bendable and electrically conductive. The elongated sheet metal part preferably has a thickness between 0.25 mm and 2 mm, more preferably between 0.4 mm and 1 mm. In particular, the entire connecting element may be formed from a metal sheet. Then, the thickness of the entire connecting element can be 0.25 mm to 2 mm, more preferably 0.4 mm to 1 mm.

According to a second aspect, the elongated part defines a length in the axial direction, a thickness in the lateral direction and a width that is measured in a direction perpendicular to the axial and lateral directions, wherein the length is greater than the width. This improves the ability of the elongated part to bend.

According to a third aspect, the elongated part defines a length in the axial direction, a thickness in the lateral direction and a width that is measured in a direction perpendicular to the axial and lateral directions, wherein the width is greater than the thickness. This also improves the ability of the elongated part to bend.

According to a fourth aspect, the first contact surface of the first portion faces in a direction perpendicular to the axial direction and the lateral direction. This simplifies connecting the connecting element to a fuse, a terminal, and/or a bus bar.

According to a fifth aspect, the second contact surface of the second portion faces in a direction perpendicular to the axial direction and the lateral direction. This also simplifies connecting the connecting element to a fuse, a terminal, and/or a bus bar.

The first portion and/or the second portion can have a through-hole so that a bolt can protrude trough the through-hole.

According to a sixth aspect, the first contact surface of the first portion defines a center and the elongated part is spaced apart laterally from the center of the first contact surface. Alternatively or additionally, the second contact surface of the second portion defines a center and the elongated part can be spaced apart laterally from the center of the second contact surface. In particular, the elongated part can connect a lateral end region of the first contact surface with a lateral end region of the second contact surface. Further, the elongated part can connect an axial end region of the first contact surface with an axial end region of the second contact surface. This allows the elongated part to be particularly long so that bending of the elongated part is possible with less force acting on the connecting element.

According to a seventh aspect, the first portion, the second portion and the connecting portion form an integral part. In particular, the first portion, the second portion and the connecting portion are all made from the same sheet metal. A simple way of manufacturing such a part, that can be highly automated, is stamping and bending the part from a sheet metal. Therefore, the integral part may be a stamped bent part formed from a sheet metal.

According to an eighth aspect, the connecting portion comprises first and second elongated parts that are elastically bendable to allow relative lateral movement of the first and second portions when a first force acting in a lateral direction is applied to the first portion and a second force acting in an opposite lateral direction is applied to the second portion. In other words, the first and second elongated parts are each connected with the first and second portions so that the first and second elongated parts form leaf springs that allow relative lateral movement of the first and second portions. According to an aspect, the first and second elongated parts are distanced from each other, in particular parallel to each other. This improves stability of the connecting part.

According to a ninth aspect, the first elongated part and the second elongated part are arranged on opposite sides of a center of the first portion seen in the lateral direction. Alternatively or additionally, the first elongated part and the second elongated part can be arranged on opposite sides of a center of the second portion seen in the lateral direction. This also improves stability of the connecting part.

According to a tenth aspect, the first elongated part and the second elongated part extend parallel to each other in the axial direction of the connecting element. This has the advantage that a force acting in a lateral direction can be completely taken up by elastic deformation of the first elongated part and the second elongated part.

The invention also relates to the use of a connecting element according to any one of the aforementioned variants in a vehicle electrical system. A vehicle is usually used in different climatic conditions and, therefore, it is favorable to protect fuses of the vehicle electrical system from forces acting on them due to different thermal expansion coefficients of parts that mechanically connect the first and second connecting portions of the fuse.

The invention further relates to an electrical assembly comprising a straight bus bar defining a length and a width and having a connecting portion, at least one fuse having a first connecting portion that is fixedly connected to the connecting portion of the bus bar, the fuse having a second connecting portion that is spaced apart from the first connecting portion in the direction of the width of the bus bar, a terminal for providing electrical current that has passed through the bus bar and the fuse, and a housing that is fixedly attached to the bus bar at a position spaced apart from the connecting portion of the bus bar, wherein the terminal is fixedly connected to the housing, and wherein the second connecting portion of the fuse and the terminal are connected by a connecting element according to any one of the previously mentioned variants of the connecting element, wherein the connecting element is arranged in a lateral direction of the bus bar. In brief, the connecting element is arranged between the fuse and the terminal. This has the advantage that the fuse can be easily replaced and the connecting element can be fixedly connected to the terminal.

An alternative way to arrange the connecting element in the electrical assembly is to place the connecting element between the bus bar and the fuse. According to this aspect, the electrical assembly comprises a straight bus bar defining a length and a width and having a connecting portion, at least one fuse having a first connecting portion and having a second connecting portion, wherein the first connecting portion and the second connecting portion are spaced apart from each other in a direction of the width of the bus bar, a terminal for providing electrical current that has passed through the bus bar and the fuse, wherein the second connecting portion of the fuse is directly or indirectly connected to the terminal, and a housing that is fixedly attached to the bus bar at a position spaced apart from the connecting portion of the bus bar, wherein the terminal is fixedly connected to the housing, wherein the first connecting portion of the fuse and the bus bar are connected by a connecting element according to any one of the previously mentioned variants of the connecting element, and wherein the connecting element is arranged in a lateral direction of the bus bar.

According to an aspect, the terminal of an aforementioned electrical assembly can comprise a threaded bolt. In particular, the electrical assembly can comprise a reception having an inner thread and a threaded bolt that is configured to be screwed into the reception. That allows a simple assembly of the terminal. To make sure that the reception does not disconnect from the connecting element, the reception can be fixedly connected to the connecting element. Alternatively, the reception can be connected to the fuse. In this case, the reception should be detachably fixed to the fuse so that the fuse can be easily replaced.

According to a further aspect, multiple fuses can be connected to the bus bar. In this case, the fuse with the smallest tripping current can be connected with the connecting element to protect the fuse with the smallest tripping current from braking. Usually, the fuse with the smallest tripping current is the mechanically weakest fuse. Therefore, protection of this fuse is favorable. In order to be able to easily replace the fuse with the smallest tripping current, it can be directly or indirectly connected to the bus bar at an end position of the bus bar.

The invention will now be described in more detail with reference to the drawings. In the drawings, like reference characters or reference characters increased by a hundred denote corresponding features consistently throughout similar embodiments.
- Fig. 1A: shows a perspective view of a connecting element according to internal state of the art;
- Fig. 1B: shows a perspective view of a connecting element according to a first embodiment;
- Fig. 1C: shows a perspective view of a connecting element according to a second embodiment;
- Fig. 1D: shows a perspective view of a connecting element according to a third embodiment having two elongated parts;
- Fig. 2A: shows a perspective view of a connecting element connecting a fuse and a terminal according to internal state of the art;
- Fig. 2B: shows a perspective view of a connecting element according to an embodiment of the invention connecting a fuse and a terminal;
- Fig. 3: shows a perspective view of an electrical assembly according to internal state of the art;
- Fig. 4A: shows a perspective view of an electrical assembly according to an embodiment of the invention;
- Fig. 4B: shows a perspective view of a connecting element as used in the electrical assembly of Fig. 4A;
- Fig. 5A: shows a top view of the electrical assembly of Fig. 4A;
- Fig. 5B: shows a top view of the connecting element of Fig. 4B.

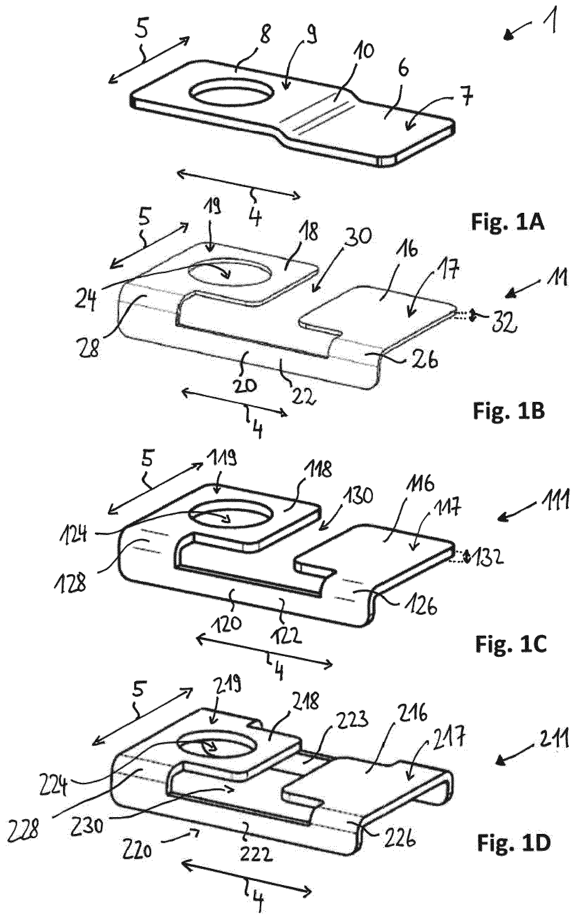

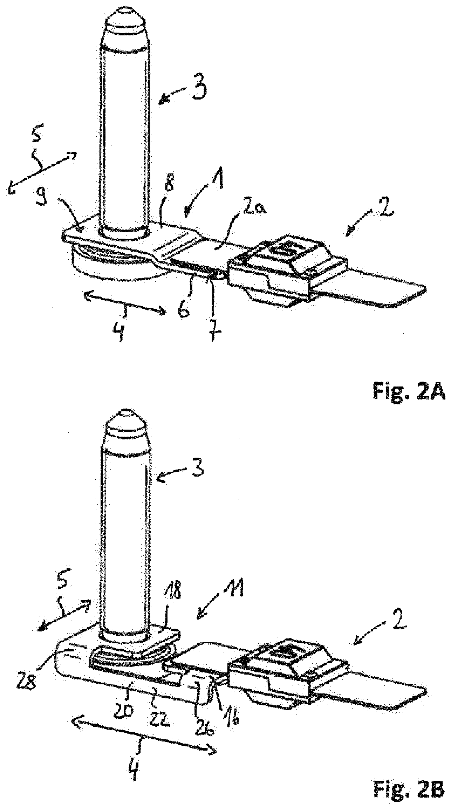

Fig. 1A depicts a connecting element 1 for mechanically and electrically connecting a fuse 2 (Fig. 2A) to a terminal 3 according to internally known state of the art. The connecting element 1 defines an axial direction 4 and a lateral direction 5 that is oriented perpendicularly to the axial direction 4. The connecting element 1 comprises a first portion 6 with a first contact surface 7 for mechanically and electrically connecting the connecting element 1 to a connecting portion 2a of the fuse 2 and an axially spaced second portion 8 with a second contact surface 9 for mechanically and electrically connecting the connecting element 1 to the terminal 3. Further, the connecting element 1 comprises a connecting portion 10 that mechanically and electrically connects the first portion 6 and the second portion 8. This connecting portion 10 is rigid and therefore, the first portion 6 and the second portion 8 cannot be moved separately from each other in the lateral direction 5.

Figs. 1B to 1D depict embodiments of connecting elements 11, 111, 211 that do allow a first portion 16, 116, 216 and a second portion 18, 118, 218 to move separately from each other in the lateral direction 5.

Fig. 1B depicts a first embodiment of a connecting element 11 having a connecting portion 20 being a resilient compensation portion. The connecting portion comprises one elongated part 22 that is elastically bendable to allow relative lateral movement of the first portion 16 and the second portion 18 when a first force acting in the lateral direction 5 is applied to the first portion 16 and a second force acting in an opposite lateral direction is applied to the second portion 18.

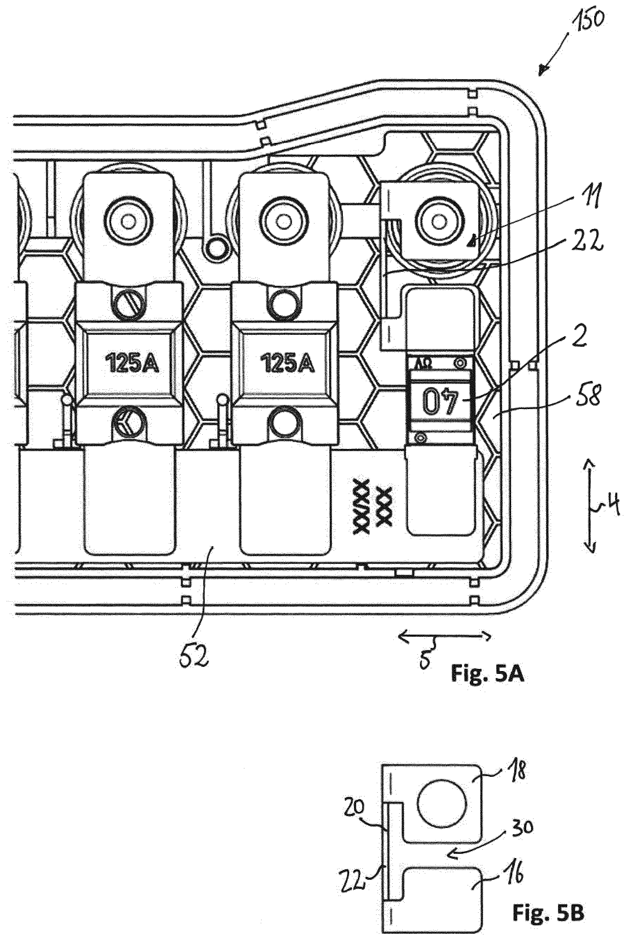

The first portion 16 has a first flat contact surface 17. This first flat contact surface 17 is arranged parallel to a second flat contact surface 19 of the second portion 18. In the second contact surface 17, a through-hole 24 is formed that is arranged in a center region of the second portion 18. A first transition zone 26 between the first portion 16 and the connecting portion 20 is formed by a bent metal sheet. A second transition zone 28 between the second portion 18 and the connecting portion 20 is also formed by a bent metal sheet. In the area between the first portion 16 and the second portion 18, a gap 30 is formed so that the first portion 16 and the second portion 18 are only connected by the elongated part 22. The gap 30, as can particularly be seen from Fig. 5B, is T-shaped. This has the effect that the elongated part 22, which length is defined by the length of the gap's 30 T-cross section, is longer and it therefore bends more easily.

The connecting element 11 is made from sheet metal by stamping and bending the sheet metal. The sheet metal is stamped to form the through-hole 24, the gap 30 and the outer rectangular shape. Afterwards, the connecting element 11 is bent approximately 90° at the transition zones 26, 28. This leads to the elongated part 22 being bent approximately 90° in respect to the first and second portions 16, 18.

While the embodiment shown in Fig. 1B has a metal sheet thickness 32 of 0.45 mm, the embodiment of Fig. 1C has a larger metal sheet thickness 132 of 1 mm. As the person skilled in the art will understand, the metal sheet thickness can vary depending on how flexible the elongated part is supposed to be. Besides the thicknesses 32, 132 of the respective connecting elements, the connecting elements 11 and 111 are the same.

Fig. 1D depicts another embodiment of a connecting element 211. In this embodiment, the first portion 216 and the second portion 218 are connected to each other by two separate elongated parts, namely a first elongated part 222 and a second elongated part 223. The two separate elongated parts 222, 223 are arranged parallel to each other and together form a connecting portion 220.

The connecting element 211, same as the connecting elements 11 and 111, is manufactured from a single sheet metal. First, the sheet metal is stamped to form the through-hole 224, the gap 230 and the outer shape of the connecting element 211. In comparison to the embodiments of Fig. 1B and Fig. 1C, the gap 230 is shaped like the cross-section of a double T-girder. After stamping, the sheet metal is bent in both areas of the crosses of the Ts. Hereby, the first and second transition zones 226, 228 are bent approximately 90° so that the elongated parts 222, 223 are arranged approximately 90° to the first portion 216 and the second portion 218. The first and second elongated parts 222, 223 are each elastically bendable to allow relative lateral movement of the first and second portions 216, 218 when a first force acting in the lateral direction 5 is applied to the first portion 216 and a second force acting in an opposite lateral direction is applied to the second portion 218.

Fig. 2A depicts the aforementioned midi-fuse 2 that is connected to the terminal 3 via the rigid connecting element 1 as shown in Fig. 1A. In other words, the terminal 3 is electrically and mechanically connected to the second contact surface 9 and the midi-fuse 2 is electrically and mechanically connected to the first contact surface 7 of the connecting element 1. When a force acts on the connecting portion 2a of the fuse 2 in the lateral direction 5, i.e. in a direction perpendicular to the axial direction 4 of the connecting element, the fuse 2 may break due to shear force acting on the fuse 2. In summary, the connecting element 1 of Fig. 2A is not able to compensate any forces acting on the fuse 2.

On the other hand, in Fig. 2B, the midi-fuse 2 and the terminal 3 are connected via a connecting element 11 or 111 that is resilient when force acts on it in a lateral direction. Therefore, when a force acts on the fuse 2 in the lateral direction 5, the first portion 16 or 116 of the connecting element 11, 111 moves relatively to the second portion 18, 118 in a lateral direction to compensate the force acting on the fuse 2. This protects the fuse 2 from breaking. As is clear for the person skilled in the art, instead of the connecting element 11 or 111, the connecting element 211 can also be used instead of the connecting element 11 or 111.

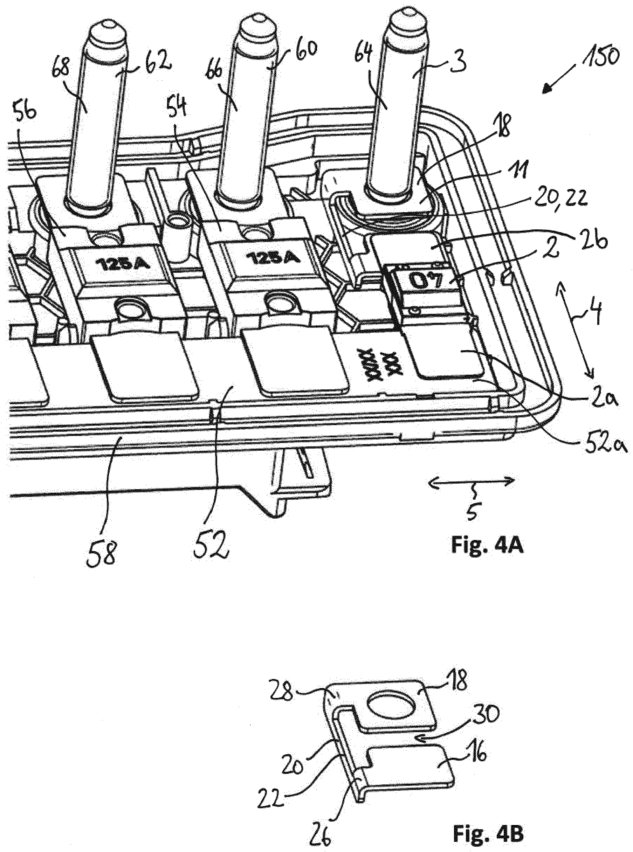

Fig. 3 shows an electrical assembly 50 according to the internal state of the art while Fig. 4A shows a similar electrical assembly 150 according to the invention. In Fig. 3, a straight bus bar 52 is connected to multiple fuses 2, 54, 56, wherein each of the fuses is arranged perpendicularly to the bus bar 52. The bus bar 52 is mechanically connected to a housing 58 at an end of the bus bar 52, not shown in the figures. Each of the fuses 2, 54, 56 is connected to a respective terminal 3, 60, 62. While the fuses 54 and 56 are directly connected to the terminals 60 and 62, the midi-fuse 2 is connected to the terminal 3 via the rigid connecting element 1 of Fig. 1A.

When the electrical assembly 50 is exposed to heat, the different parts start to expand in relation to their respective thermal expansion coefficients. Therefore, the housing 58, which is usually made of a polymer, expands more than the straight bus bar 52 that is usually made from metal. Due to this difference in thermal expansion in the lateral direction 5 of the fuse 2, the fuse 2 experiences a shear force, i.e. a lateral force that acts on a second connecting portion 2b of the fuse 2 while the first connecting portion 2a of the fuse is held in place. In summary, the electrical assembly 50 does not offer any protection for the fuse 2. Instead great temperature changes may cause the fuse 2 to break because of the different thermal expansion coefficients of the housing 58 and the bus bar 52.

In contrast thereto, the electrical assembly 150 comprises an elastic connecting element 11, 111, 211 as explained in respect to Figs. 1B to 1D. The connecting element 11, 111, 211 is electrically and mechanically connected to the fuse 2 and to the terminal 3. While Fig. 4A shows the connecting element 11 arranged between the fuse 2 and the terminal 3, a similar connecting element can alternatively or additionally be arranged between the bus bar 52 and the fuse 2 so that the connecting element is electrically and mechanically connected to the fuse 2 and the bus bar 52. As can be seen from Fig. 4A also, each terminal 3, 60, 62 comprises a threaded bolt 64, 66, 68. The threaded bolt 64 protrudes trough the trough-hole 24 formed in the second portion 18. The axis of the threaded bolt 64 is arranged in the direction, in which the second contact surface 19 faces. In order to fixedly connect the threaded bolt 64 to the contact surface 19, a reception (not shown) can be connected to the contact surface 19 and the threaded bolt 64 can be screwed into the reception. Alternatively, a nut (not shown) can be screwed onto the threaded bolt 64 contacting the contact surface 19.

Fig. 5A shows the electrical assembly 150 from a top view. As can be seen from this figure, the elongated part 22 is arranged perpendicularly to the bus bar 52 in a neutral position, i.e. at room temperature. When the housing 58 and the bus bar 52 expand due to a raise in temperature, the elongated part 22 bends to form an S-curved shape. On the other hand, when the housing 58 and the bus bar 52 contract due to a temperature drop, the elongated part 22 bends to form an S-curved shape in the opposite direction. Therefore, the fuse 2 is protected in warm and cold conditions. The connecting element 11, 111, 211 can be used e.g. in a vehicle electrical system to protect fuses of the system when the vehicle is exposed to warm or cold weather conditions.

### List of reference signs

- 1: connecting element
- 2: fuse
- 2a: first connecting portion
- 2b: second connecting portion
- 3: terminal
- 4: axial direction
- 5: lateral direction
- 6: first portion
- 7: first contact surface
- 8: second portion
- 9: second contact surface
- 10: connecting portion
- 11: connecting element
- 16: first portion
- 17: first contact surface
- 18: second portion
- 19: second contact surface
- 20: connecting portion
- 22: elongated part
- 24: through-hole
- 26: first transition zone
- 28: second transition zone
- 30: gap
- 32: thickness
- 50: electrical assembly
- 52: bus bar
- 52a: connecting portion
- 54: fuse
- 56: fuse
- 58: housing
- 60: terminal
- 62: terminal
- 64: threaded bolt
- 66: threaded bolt
- 68: threaded bolt
- 150: electrical assembly
- 222: first elongated part
- 223: second elongated part

## Claims

1. A connecting element (11; 111; 211) defining an axial direction (4), comprising
a first portion (16; 116; 216) with a first contact surface (17; 117; 217) for mechanically and electrically connecting the connecting element (11; 111; 211) to a connecting portion (2b) of a fuse (2),
an axially spaced second portion (18; 118; 218) with a second contact surface (19; 119; 219) for mechanically and electrically connecting the connecting element (11; 111; 211) to a terminal (3) or an axially spaced second portion with a second contact surface for mechanically and electrically connecting the connecting element to a bus bar (52), and
a connecting portion (20; 120; 220) mechanically and electrically connecting the first portion (16; 116; 216) and the second portion (18; 118; 218),
**characterized in that**
the connecting portion (20; 120; 220) comprises at least one elongated part (22; 122; 222, 223) that is elastically bendable to allow relative lateral movement of the first and second portions (16, 18; 116, 118; 216, 218) when a first force acting in a lateral direction (5) is applied to the first portion (16; 116; 216) and a second force acting in an opposite lateral direction is applied to the second portion (18; 118; 218).

2. A connecting element according to claim 1,
**characterized in that**
wherein the at least one elongated part (22; 122; 222, 223) is formed from sheet metal.

3. A connecting element according to claim 1 or 2,
**characterized in that**
the at least one elongated part (22; 122; 222, 223) defines a length in the axial direction (4), a thickness in the lateral direction (5) and a width that is measured in a direction perpendicular to the axial and lateral directions,
wherein the length is greater than the width.

4. A connecting element according to any one of the preceding claims,
**characterized in that**
the at least one elongated part (22; 122; 222, 223) defines a length in the axial direction (4), a thickness in the lateral direction (5) and a width that is measured in a direction perpendicular to the axial and lateral directions,
wherein the width is greater than the thickness.

5. A connecting element according to any one of the preceding claims,
**characterized in that**
the first contact surface (17; 117; 217) of the first portion (16; 116; 216) faces in a direction perpendicular to the axial direction (4) and the lateral direction (5).

6. A connecting element according to any one of the preceding claims,
**characterized in that**
the second contact surface (19; 119; 219) of the second portion (18; 118; 218) faces in a direction perpendicular to the axial direction (4) and the lateral direction (5).

7. A connecting element according to any one of the preceding claims,
**characterized in that**
the first contact surface (17; 117; 217) of the first portion (16; 116; 216) defines a center and the elongated part (22; 122; 222, 223) is spaced apart laterally from the center of the first contact surface (17; 117; 217) and/or
the second contact surface (19; 119; 219) of the second portion (18; 118; 218) defines a center and the elongated part (22; 122; 222, 223) is spaced apart laterally from the center of the second contact surface (19; 119; 219).

8. A connecting element according to any one of the preceding claims,
**characterized in that**
the first portion (16; 116; 216), the second portion (18; 118; 218) and the connecting portion (20; 120; 220) form an integral part, in particular wherein the integral part is a stamped bent part formed from a sheet metal.

9. A connecting element according to any one of the preceding claims,
**characterized in that**
the connecting portion (220) comprises first and second elongated parts (222, 223) that are elastically bendable to allow relative lateral movement of the first and second portions (216, 218) when a first force acting in a lateral direction (5) is applied to the first portion (216) and a second force acting in an opposite lateral direction is applied to the second portion (218).

10. A connecting element according to claim 9,
**characterized in that**
the first elongated part (222) and the second elongated part (223) are arranged on opposite sides of a center of the first portion (216) seen in the lateral direction (5) and/or
the first elongated part (222) and the second elongated part (223) are arranged on opposite sides of a center of the second portion (218) seen in the lateral direction.

11. A connecting element according to claim 9 or 10,
**characterized in that**
the first elongated part (222) and the second elongated part (223) extend parallel to each other in the axial direction (4) of the connecting element (211).

12. Use of a connecting element (11; 111; 211) according to any one of the preceding claims in a vehicle electrical system.

13. Electrical assembly comprising
a straight bus bar (52) defining a length and a width and having a connecting portion (52a),
at least one fuse (2, 54, 56) having a first connecting portion (2a) that is fixedly connected to the connecting portion (52a) of the bus bar (52) and having a second connecting portion (2b) that is spaced apart from the first connecting portion (2a) in the direction of the width of the bus bar (52),
a terminal (3) for providing electrical current that has passed through the bus bar (52) and the fuse (2), and
a housing (58) that is fixedly attached to the bus bar (52) at a position spaced apart from the connecting portion (52a) of the bus bar (52),
wherein the terminal (3) is fixedly connected to the housing (58), and
wherein the second connecting portion (2b) of the fuse (2) and the terminal (3) are connected via a connecting element (11; 111; 211) according to any one of the previous claims, wherein the connecting element (11; 111; 211) is arranged perpendicular to the bus bar (52).

14. Electrical assembly comprising
a straight bus bar (52) defining a length and a width and having a connecting portion (52a),
at least one fuse (2, 54, 65) having a first connecting portion (2a) and having a second connecting portion (2b), wherein the first connecting portion (2a) and the second connecting portion (2b) are spaced apart from each other in a direction of the width of the bus bar (52),
a terminal (3) for providing electrical current that has passed through the bus bar (52) and the fuse (2), wherein the second connecting portion (2b) of the fuse (2) is directly or indirectly connected to the terminal (3), and
a housing (58) that is fixedly attached to the bus bar (52) at a position spaced apart from the connecting portion (52a) of the bus bar (52),
wherein the terminal (3) is fixedly connected to the housing (58), and
wherein the first connecting portion (2a) of the fuse (2) and the bus bar (52) are connected via a connecting element (11; 111; 211) according to any one of the previous claims, wherein the connecting element (11; 111; 211) is arranged perpendicular to the bus bar (52).

15. Electrical assembly according to claim 13 or 14,
**characterized in that**
the terminal (3) comprises a threaded bolt (64), and/or
multiple fuses (2, 54, 56) are connected to the bus bar (52) wherein the fuse (2) with the smallest tripping current is connected via the connecting element (11; 111; 211), in particular wherein the fuse (2) with the smallest tripping current is directly or indirectly connected to the bus bar (52) at an end position of the bus bar (52).
